# EUROPÄISCHE PATENTSCHRIFT

(11) **EP 4 132 830 B1**
(45) Veröffentlichungstag und Bekanntmachung des Hinweises auf die Patenterteilung: **13.03.2024**
(21) Anmeldenummer: 21717366.5
(22) Anmeldetag: 31.03.2021
(51) Int. Cl.: B60W 60/00, B60W 50/14, B60Q 1/34

(54) **VERFAHREN ZUM BETREIBEN EINES FAHRERASSISTENZSYSTEMS EINES FAHRZEUGS MIT FAHRERMODERATION BEI TEILAUTOMATISIERTEN FUNKTIONEN, FAHRERASSISTENZSYSTEM SOWIE FAHRZEUG**
METHOD FOR OPERATING A DRIVER ASSISTANCE SYSTEM OF A VEHICLE, COMPRISING DRIVER MODERATION FOR PARTIALLY-AUTOMATED FUNCTIONS, DRIVER ASSISTANCE SYSTEM, AND VEHICLE
PROCÉDÉ DE FONCTIONNEMENT D'UN SYSTÈME D'AIDE À LA CONDUITE D'UN VÉHICULE, COMPRENANT UNE MODÉRATION DE CONDUITE POUR DES FONCTIONS PARTIELLEMENT AUTOMATISÉES, SYSTÈME D'AIDE À LA CONDUITE ET VÉHICULE

(30) Priorität: 07.04.2020 DE 102020109666
(43) Veröffentlichungstag der Anmeldung: 15.02.2023
(73) Patentinhaber: Bayerische Motoren Werke Aktiengesellschaft, 80809 München (DE)
(72) Erfinder: KUNBERGER, Jan-Mark, 80995 München (DE)
(86) Internationale Anmeldenummer: PCT/EP2021/058504
(87) Internationale Veröffentlichungsnummer: WO 2021/204632

(56) Entgegenhaltungen:
- EP-A1- 3 125 211
- EP-A1- 3 543 082
- US-A1- 2018 029 610

## Beschreibung

Die vorliegende Erfindung betrifft ein Verfahren zum Betreiben eines Fahrerassistenzsystems eines Fahrzeugs. Des Weiteren betrifft die vorliegende Erfindung ein Fahrerassistenzsystem für ein Fahrzeug sowie ein Fahrzeug mit einem derartigen Fahrerassistenzsystem.

Aus dem Stand der Technik sind unterschiedliche Fahrerassistenzsysteme für Fahrzeuge bekannt. Vorliegend gilt das Interesse insbesondere solchen Fahrerassistenzsystemen, welche teilautomatisierte Funktionen bzw. Fahrmanöver ermöglichen. Bei dieser Automatisierungsstufe gemäß dem Level 2 der Norm SAE J3016 kann das Fahrerassistenzsystem beispielsweise die Längsführung und/oder die Querführung des Fahrzeugs übernehmen, der Fahrer bleibt aber weiter in der Verantwortung. Fahrerassistenzsysteme gemäß dem Level 2 entlasten den Fahrer von eintönigen Fahraufgaben. Die Verfügbarkeit und die Performanz dieser Fahrerassistenzsysteme sind aber nicht in jeder Situation garantiert. Um die Sicherheit dieser Systeme zu gewährleisten, ist daher die Überwachung durch den Fahrer erforderlich.

Ferner besteht ein Zusammenhang zwischen der Performanz des Fahrerassistenzsystems und einem Automatisierungsvertrauen, welches der Fahrer bei der Nutzung der Fahrerassistenzfunktion aufbaut. Mit steigender Performanz des Fahrerassistenzsystems besteht in seltenen Fällen die Gefahr, dass der Fahrer ein hohes Vertrauen aufbaut und die Fahrerassistenzfunktion bzw. die Durchführung des teilautomatisierten Fahrmanövers nur noch eingeschränkt überwacht. Da die Leistungsfähigkeit auch von der lokalen Situation abhängig ist, besteht in seltenen Fällen die Möglichkeit, dass der Fahrer, der regelmäßig die gleiche Strecke durchfährt, auf dieser Strecke eine erhöhte Funktionsperformanz erlebt und daher aufgrund der ausbleibenden Fahrermoderation ein erhöhtes Automatisierungsvertrauen aufbaut.

Die EP 3 125 211 A1 offenbart eine informationsdarstellende Vorrichtung zur Verwendung in einem autonomen Fahrzeug, die zwischen autonomer Fahrsteuerung, in der das Fahrzeug unter autonomer Fahrsteuerung gefahren wird, und manueller Fahrsteuerung, in der das Fahrzeug von einem Fahrer gefahren wird, umschalten kann. Die Vorrichtung umfasst eine Antwortaktionsbestimmungseinheit, die konfiguriert ist, um eine Antwortaktion zu bestimmen, die von dem Fahrer des autonomen Fahrzeugs durchzuführen ist, um die autonome Fahrsteuerung durch Bestimmen beizubehalten, dass der Fahrer der autonomen Fahrsteuerung zustimmt. Ferner umfasst die Vorrichtung eine Antwortaktionssteuereinheit, die konfiguriert ist, um eine Steuerung zur Aufforderung an den Fahrer durchzuführen, die von der Antwortaktionsbestimmungseinheit bestimmte Antwortaktion durchzuführen.

Es ist Aufgabe der vorliegenden Erfindung, eine Lösung aufzuzeigen, wie der Betrieb eines Fahrerassistenzsystems der eingangs genannten Art, welches teilautomatisierte Funktionen ermöglicht, sicherer erfolgen kann.

Diese Aufgabe wird erfindungsgemäß durch ein Verfahren, durch ein Fahrerassistenzsystem sowie durch ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Betreiben eines Fahrerassistenzsystems eines Fahrzeugs. Das Verfahren umfasst das Durchführen einer Mehrzahl von teilautomatisierten Funktionen mittels des Fahrerassistenzsystems während eines Betriebs des Fahrzeugs. Bei diesen teilautomatisierten Funktionen werden mittels des Fahrerassistenzsystems eine Längsführung und/oder eine Querführung des Fahrzeugs geregelt. Alternativ oder zusätzlich kann bei den teilautomatisierten Funktionen mittels des Fahrerassistenzsystems eine Information, welche ein Umfeld des Fahrzeugs beschreibt, ausgegeben werden und/oder ein Signal an das Umfeld ausgegeben werden. Des Weiteren ist vorgesehen, dass nach einer vorbestimmten Anzahl von durchgeführten teilautomatisierten Funktionen für eine nachfolgende Funktion, welche mittels des Fahrerassistenzsystems teilautomatisiert durchführbar ist, ein Moderationssignal an einen Fahrer des Fahrzeugs ausgegeben wird. Bei der Ausgabe des Moderationssignals wird der Fahrer zu einer Rückmeldung zu der nachfolgenden Funktion aufgefordert.

Mit dem Fahrerassistenzsystem können im Betrieb des Fahrzeugs als die teilautomatisierten Funktionen beispielswiese teilautomatisierte Fahrmanöver durchgeführt werden. Bei der Durchführung dieser teilautomatisierten Fahrmanöver wird das Fahrzeug gemäß dem Level 2 der Norm SAE J3016 betrieben. Bei den Fahrmanövern kann auf Grundlage von Messungen mit entsprechenden Umfeldsensoren des Fahrerassistenzsystems das Umfeld bzw. die Umgebung des Fahrzeugs erfasst werden. In Abhängigkeit von der erfassten Umgebung können dann Lenkmanöver, Bremsmanöver und/oder Beschleunigungsmanöver durchgeführt werden. Zudem ist insbesondere vorgesehen, dass der menschliche Fahrer die Durchführung der Fahrmanöver überwacht, sodass dieser notfalls eingreifen kann.

Des Weiteren kann das Fahrerassistenzsystem bei den teilautomatisierten Funktionen eine Information oder Informationen über das Umfeld des Fahrzeugs bereitstellen. Beispielsweise können dem Fahrer mithilfe eines Informationssystems in dem Umfeld erfasste Objekte bzw. weitere Verkehrsteilnehmer angezeigt werden. Es kann ferner vorgesehen sein, dass dem Fahrer geplante teilautomatisierte Fahrmanöver, wie beispielsweise ein geplanter Spurwechsel, mittels des Informationssystems angezeigt werden. Des Weiteren können Signale für das Umfeld teilautomatisiert generiert werden. Ein solches Signal kann als Lichtsignal, beispielsweise mit einem Fahrtrichtungsanzeiger des Fahrzeugs, ausgegeben werden. Bei zukünftigen Anwendungen kann es auch vorgesehen sein, dass teilautomatisiert akustische Signale und/oder optische Signale mit einem Display oder dergleichen an das Umfeld ausgegeben werden. Diese Signale können insbesondere dazu dienen, ein sicherheitsrelevantes Verhalten des Umfelds sicherzustellen. Beispielsweise kann als Signal eine Information an Fußgänger oder andere Verkehrsteilnehmer ausgegeben werden, welche beschreibt, dass das Fahrzeug aktuell angehalten hat und wartet. Diese Ausgabe eines Signals an das Umfeld kann dem Fahrer vorher angekündigt werden.

Gemäß der vorliegenden Erfindung ist vorgesehen, dass überprüft wird, ob mit dem Fahrerassistenzsystem bereits eine vorbestimmte Anzahl von teilautomatisierten Funktionen durchgeführt wurde. Insbesondere kann überprüft werden, ob eine vorbestimmte Anzahl von performanten teilautomatisierten Funktionen durchgeführt wurde. Unter einer performanten teilautomatisierten Funktion ist dabei insbesondere zu verstehen, dass die teilautomatisierte Funktion mit einer bestimmten Performanz, beispielsweise 90 %, durchgeführt wurde. Dabei kann die Performanz eine Leistungsfähigkeit und/oder Funktionsfähigkeit des Fahrerassistenzsystems bei der Durchführung der teilautomatisierten Funktion beschreiben. Wenn diese vorbestimmte Anzahl von durchgeführten Funktionen erreicht ist, kann für die nachfolgende Funktion eine Fahrermoderation gefordert werden. Bei der nachfolgenden Funktion handelt es sich beispielsweise um ein Fahrmanöver, welches von dem Fahrerassistenzsystem teilautomatisiert durchgeführt werden kann. Um die Fahrermoderation zu fordern, kann das Moderationssignal ausgesendet werden und der Fahrer kann dazu aufgefordert werden, eine Rückmeldung zu dem nachfolgenden Fahrmanöver zu geben.

Wie bereits eingangs erläutert wurde, kann sich in seltenen Fällen die Situation ergeben, dass der Fahrer nach mehreren performant durchgeführten teilautomatisierten Fahrmanövern oder Funktionen ein signifikantes Automatisierungsvertrauen aufbaut. Dies bedeutet insbesondere, dass der Fahrer darauf vertraut, dass die teilautomatisierte Funktion von dem Fahrerassistenzsystem sicher durchgeführt wird. Dies kann in seltenen Fällen zur Folge haben, dass der Fahrer die teilautomatisierte Funktion nicht ausreichend überwacht und/oder gegebenenfalls unaufmerksam ist. Gemäß der Erfindung ist es daher vorgesehen, dass die Fahreraufmerksamkeit von dem Fahrerassistenzsystem so moderiert wird, dass der Fahrer kein signifikantes Automatisierungsvertrauen aufbaut. Der Fahrer soll regelmäßig die Funktionsgrenzen des Fahrerassistenzsystems erleben. Um dies sicherzustellen, kann das Fahrerassistenzsystem nach der vorbestimmten Anzahl von performanten teilautomatisierten Funktionen bzw. Fahrmanöver mindestens eine für den Fahrer als nicht performant erlebbare Funktion anbieten. Damit kann die Fahreraufmerksamkeit auch bei einer hohen Funktionsperformanz des Fahrerassistenzsystems besser moderiert werden. Auch in Bezug auf die Informationen, welche das Umfeld des Fahrzeugs beschreiben, und die Signale, die an das Umfeld ausgegeben werden, kann durch das erfindungsgemäße Verfahren verhindert werden, dass der Fahrer ein zu hohes Vertrauen aufbaut. Insgesamt kann der Betrieb des Fahrerassistenzsystems bzw. die Durchführung der teilautomatisierten Funktionen damit sicherer erfolgen.

Zudem wird erfindungsgemäß die Anzahl in Abhängigkeit von einer Performanz des Fahrerassistenzsystems vorbestimmt. Dabei kann die Performanz auch als Performance oder Funktionsperformance bezeichnet werden. Die Performanz kann beschreiben, mit welcher Leistungsfähigkeit bzw. wie gut die teilautomatisierte Funktion und insbesondere das teilautomatisierte Fahrmanöver mittels des Fahrerassistenzsystems durchgeführt wird. Die Performanz kann insbesondere als gering angesehen werden, wenn das teilautomatisierte Fahrmanöver oder die Funktion durch das Fahrerassistenzsystem abgebrochen wurde. Die Performanz kann auch als gering angenommen werden, wenn bei der Durchführung des Fahrmanövers ein Fahrereingriff erfolgt ist bzw. der Fahrer wieder das Steuer übernommen hat. Im Gegensatz dazu kann die Performanz als hoch angenommen werden, wenn das Fahrmanöver bzw. die Funktion mittels des Fahrerassistenzsystems vollständig durchgeführt wurde bzw. erfolgreich vollendet wurde. Für die Bestimmung der Performanz können entsprechende Zähler verwendet werden, mit denen die Anzahl der Eingriffe bestimmt werden kann.

In einer Ausführungsform wird der Fahrer bei der Ausgabe des Moderationssignals zu einer Bestätigung aufgefordert, dass die nachfolgende Funktion teilautomatisiert von dem Fahrerassistenzsystem durchgeführt wird. Als die Rückmeldung zu der nachfolgenden Funktion kann der Fahrer also zu der Bestätigung aufgefordert werden. Mit anderen Worten kann der Fahrer aufgefordert werden, die automatische Regelung der Fahrerassistenzfunktion manuell zu bestätigen. Die Bestätigung kann von dem Fahrer insbesondere manuell durchgeführt werden. Beispielsweise kann der Fahrer dazu aufgefordert werden, eine entsprechende Bedieneingabe an einem Bedienelement in einem Innenraum des Fahrzeugs oder dergleichen zu tätigen. Es kann auch vorgesehen sein, dass diese Bedieneingabe durch eine Spracheingabe und/oder durch eine Geste erfolgt.

Des Weiteren kann es vorgesehen sein, dass der Fahrer dazu aufgefordert wird, eines der Pedale des Fahrzeugs zu betätigen bzw. zu berühren. Beispielsweise kann der Fahrer dazu aufgefordert werden, für die Bestätigung das Bremspedal zu betätigen oder anzutippen. Nachdem die Bestätigung durch den Fahrer erfolgt ist bzw. erfasst wurde, kann dann die nachfolgende Funktion und insbesondere das nachfolgende Fahrmanöver von dem Fahrerassistenzsystem teilautomatisiert durchgeführt werden. Auf diese Weise kann die Aufmerksamkeit des Fahrers erhöht werden und der Aufbau eines signifikanten Automatisierungsvertrauens kann verhindert werden.

Auch wenn die nachfolgende Funktion von dem Fahrerassistenzsystem eigentlich teilautomatisiert durgeführt werden könnte, kann der Fahrer von dem Fahrerassistenzsystem dazu aufgefordert werden, die nachfolgende Funktion manuell durchzuführen. Insbesondere kann es vorgesehen sein, dass der Fahrer zum manuellen Durchführen eines Fahrmanövers aufgefordert wird. Es kann auch vorgesehen sein, dass der Fahrer mittels des Fahrerassistenzsystems über eine Nichtverfügbarkeit informiert wird. Dem Fahrer kann also angezeigt werden, dass eine teilautomatisierte Durchführung der nachfolgenden Funktion nicht möglich ist bzw. nicht zur Verfügung steht, obwohl das Fahrerassistenzsystem die Funktion eigentlich teilautomatisiert durchführen könnte. Zu diesem Zweck kann infolge des Aussendens des Moderationssignals ein entsprechender Hinweis an den Fahrer ausgegeben werden. Somit kann dem Fahrer eine nicht performante Funktionssituation geboten werden. Es kann auch vorgesehen sein, dass die teilautomatisierte Funktion bzw. das teilautomatisierte Fahrmanöver ohne vorhergehende Information bzw. ohne Ankündigung ausbleibt. Mit anderen Worten kann die Funktion spontan ohne Ankündigung nicht zur Verfügung stehen. Dies bedeutet insbesondere, dass die Funktion ohne eine entsprechende Anzeige ausbleibt. Somit kann verhindert werden, dass sich der Fahrer auf eine Nichtverfügbarkeitsanzeige verlässt. Eine derartige Moderation hat einen sehr hohen Aufforderungscharakter.

Bei Fahrerassistenzsystemen gemäß dem Level 2 kann auch verhindert werden, dass ein zu hohes Vertrauen in die Informationssysteme zum Bereitstellen der Informationen über das Umfeld aufgebaut wird. In diesem Zusammenhang können auch für ein solches Informationssystem künstliche Systemgrenzen genutzt werden. Bevorzugt kann das Informationssystem so gestaltet sein, dass es sicherheitskritische Informationen, beispielsweise eine Darstellung des rückwärtigen Verkehrs, zumindest regelmäßig (für den Fahrer eindeutig erkennbar) nicht darstellt. Beispielsweise kann nach einer bestimmten Anzahl von Spurwechselsituationen mittels des Informationssystems der rückwärtige Verkehr nicht anzeigt werden. Es kann auch vorgesehen sein, dass geplante Fahrmanöver nicht mehr angezeigt werden.

Auch die Ausgabe von Signalen an das Umfeld kann teilweise auch sicherheitskritisch sein. Beispielsweise kann das automatische Ausgeben von Lichtsignalen mittels eines Fahrtrichtungsanzeigers bzw. Blinkers sicherheitskritisch sein. So könnte sich der Fahrer beispielsweise darauf verlassen, dass das Fahrerassistenzsystem immer auch den Blinker nach dem Spurwechsel ausschaltet. Vor einer Kreuzung ist beispielsweise das Nicht-Ausschalten eines Blinkers sicherheitsrelevant. Dies kann grundsätzlich auf alle Informationen an das Umfeld, welche dazu dienen, ein sicherheitsrelevantes Verhalten des Umfelds sicherzustellen, erweitert werden.

Weiterhin ist vorteilhaft, wenn die Anzahl in Abhängigkeit von einem zuvor bestimmten Risikoprofil des Fahrers vorbestimmt wird. Es kann also während des Betriebs des Fahrzeugs ein Risikoprofil ermittelt werden. Dieses Risikoprofil kann grundsätzlich beschreiben, ob der Fahrer eher vorsichtig ist oder ob der Fahrer eher risikobereit ist. Wenn der Fahrer eher risikobereit ist, kann die Anzahl geringer gewählt werden als bei einem vorsichtigen oder zurückhaltenden Fahrer. Dieses Risikoprofil kann auch jeweils für unterschiedliche Fahrer des Fahrzeugs bestimmt werden. Das Risikoprofil kann anhand eines Fahrverhaltens des Fahrers bzw. anhand von manuell durchgeführten Fahrmanövern des Fahrers bestimmt werden. Hierbei kann beispielsweise berücksichtigt werden, ob der Fahrer ein zurückhaltendes Fahrverhalten oder ein sportliches Fahrverhalten zeigt. Auf diese Weise kann die Fahrermoderation individuell bzw. auf den Fahrer bezogen vorgenommen werden.

Zur Bestimmung des Risikoprofils des Fahrers können auch Eingriffe von Sicherheitssystemen des Fahrzeugs während des manuellen Betriebs durch den Fahrer berücksichtigt werden. Solche Sicherheitssysteme können ein Notbremssystem, ein Frontschutz, ein Vorfahrtwarner oder Stabilisierungssysteme, wie ABS und/oder DSC, sein.

Beispielsweise können Bremseingriffe der Sicherheitssysteme, Lenkeingriffe der Sicherheitssysteme, ausgegebene Warnungen oder dergleichen in Betracht gezogen werden. Wenn vermehrt Eingriffe durch die Sicherheitssysteme vorgenommen werden, kann der Fahrer als eher risikobereit angenommen werden. Des Weiteren kann auch berücksichtigt werden, ob der Fahrer bei teilautomatisierten Fahrmanövern manuell eingreift. Wenn der Fahrer selbst eingreift, kann davon ausgegangen werden, dass der Fahrer aufmerksam und nicht risikobereit ist und/oder ein geringes Automatisierungsvertrauen besitzt. In diesem Fall kann die Anzahl höher gewählt werden.

Es kann auch vorgesehen sein, dass die Anzahl in Abhängigkeit von einer Aufmerksamkeit des Fahrers bestimmt wird. Der Fahrer kann als aufmerksam gelten, wenn er grundsätzlich seine Aufmerksamkeit auf das Verkehrsgeschehen richtet. Zur Erkennung der Aufmerksamkeit des Fahrers kann beispielsweise über eine Kamera die Blickrichtung des Fahrers erfasst werden. Ferner kann zur Bestimmung der Aufmerksamkeit herangezogen werden, ob Aufforderungen oder Warnungen an den Fahrer durch das Fahrerassistenzsystem oder Sicherheitssysteme ausgegeben wurden. Beispielsweise kann überprüft werden, ob ein sogenannter Hands on Request oder dergleichen an den Fahrer ausgegeben wurde. Hierbei kann auch die Anzahl von solchen bisher ausgegebenen Aufforderungen berücksichtigt werden. Dabei kann die vorbestimmte Anzahl bei einem aufmerksamen Fahrer größer gewählt werden als bei einem eher unaufmerksamen Fahrer. Damit kann die Fahrermoderation individuell an die Aufmerksamkeitsbedürfnisse des Fahrers angepasst werden.

In einer weiteren Ausgestaltung wird die Anzahl in Abhängigkeit davon vorbestimmt, wie komplex und/oder kritisch die nachfolgende Funktion und insbesondere das Fahrmanöver ist. Mit anderen Worten kann die Anzahl in Abhängigkeit von einer Art des Fahrmanövers vorbestimmt werden. Dabei kann berücksichtigt werden, wie komplex die Fahrsituation und/oder die Verkehrssituation ist. Ferner kann die Umgebung bzw. das Umfeld des Fahrzeugs berücksichtigt werden. Beispielsweise kann die Anzahl von anderen Verkehrsteilnehmern oder Objekten in dem Umfeld des Fahrzeugs berücksichtigt werden. Ein komplexes Fahrmanöver kann beispielsweise vorliegen, wenn sich eine Vielzahl von weiteren Verkehrsteilnehmern in dem Umfeld des Fahrzeugs befindet. Bei komplexen teilautomatisierten Fahrmanöver kann die vorbestimmte Anzahl geringer sein als bei weniger komplexen Fahrmanövern. Alternativ oder zusätzlich kann berücksichtigt werden, wie kritisch bzw. sicherheitskritisch die durchgeführten teilautomatisierten Fahrmanöver waren. Ein sicherheitskritisches Fahrmanöver liegt beispielsweise vor, wenn das Fahrerassistenzsystem eine Notbremsung durchführt oder die Längsbeschleunigung automatisiert auf Grundlage der

Lichtsignale einer Ampel regelt. Eine kritische Fahrsituation kann auch vorliegen, wenn das Fahrzeug teilautomatisiert die Längsführung in Abhängigkeit von erkannten Verkehrszeichen regelt. Bei kritischen oder sicherheitskritischen teilautomatisierten Fahrmanövern kann die Anzahl geringer gewählt werden als bei weniger sicherheitskritischen Fahrmanövern. Insgesamt kann somit die Fahrermoderation situationsabhängig durchgeführt werden. Darüber hinaus können dem Fahrer die natürlichen Systemgrenzen vermittelt werden.

Hier kann auch berücksichtigt werden, dass sich das Fahrerassistenzsystem bei mehrmals durchgeführten ähnlichen Funktionen oder Fahrmanövern in Laufe der Zeit verbessert. Das Fahrerassistenzsystem kann also als selbstlernend angenommen werden. Dies bedeutet insbesondere, dass die Performanz bei der wiederholten Durchführung der teilautomatisierten Funktionen zunimmt. Bei einer hohen Performanz kann der Fahrer das Automatisierungsvertrauen aufbauen. Um diesem Aspekt entgegenzuwirken, ist es insbesondere vorgesehen, dass die Anzahl bei einer hohen Performanz niedriger gewählt wird als bei einer hohen Performanz. Damit kann die Anzahl in Abhängigkeit von einer Funktionsfähigkeit des Fahrerassistenzsystems in Bezug auf die teilautomatisierten Funktionen vorbestimmt werden.

In einer weiteren Ausführungsform wird die Anzahl mittels eines Zufallsgenerators vorbestimmt. Es kann vorgesehen sein, dass die Bestimmung der Anzahl in Abhängigkeit von zumindest einem der vorgenannten Aspekte und zusätzlich in Abhängigkeit von einem Zufallsgenerator bzw. einer Zufallszahl durchgeführt wird. Alternativ dazu kann es vorgesehen sein, die Anzahl nur in Abhängigkeit von einem Zufallsgenerator vorbestimmt wird. Bei der Verwendung des Zufallsgenerators kann beispielsweise nach dem Motorstart bzw. nach dem Klemmenwechsel eine Zufallszahl bestimmt werden. Auf Grundlage dieser Zufallszahl kann dann die Anzahl vorbestimmt werden. Dadurch kann beispielsweise verhindert werden, dass der Fahrer eine Regelmäßigkeit bei der Fahrermoderation erkennt.

In einer weiteren Ausführungsform wird das Moderationssignal ausgegeben, falls die vorbestimmte Anzahl von ähnlichen automatisierten Funktionen durchgeführt wurde und/oder die automatisierten Funktionen auf demselben Streckenabschnitt durchgeführt wurden. Das erfindungsgemäße Verfahren kann insbesondere für wiederkehrende teilautomatisierte Fahrmanöver verwendet werden. Ein solches wiederkehrendes Fahrmanöver kann beispielsweise vorliegen, wenn auf dem täglichen Weg zur Arbeit mittels des Fahrerassistenzsystems immer wieder dasselbe Fahrmanöver an derselben Stelle durchgeführt wird. Insbesondere bei solchen wiederkehrenden oder ähnlichen teilautomatisierten Fahrmanöver kann der Fahrer ein signifikantes Automatisierungsvertrauen aufbauen. Durch die Fahrermoderation kann der Aufbau des Automatisierungsvertrauens vermindert werden.

Ein erfindungsgemäßes Fahrerassistenzsystem für ein Fahrzeug ist zum Durchführen eines erfindungsgemäßen Verfahrens und der vorteilhaften Ausgestaltungen davon eingerichtet. Das Fahrerassistenzsystem kann dazu ausgebildet sein, das Fahrzeug teilautomatisiert zu manövrieren. Das Fahrmanöver, welches mit dem Fahrerassistenzsystem durchgeführt werden kann bzw. die Fahrfunktion, welche mit dem Fahrerassistenzsystem bereitgestellt werden kann, kann beispielsweise ein Regeln des Abstands, eine Unterstützung beim Spurhalten oder Spurwechseln oder dergleichen sein. Das Fahrmanöver kann auch das automatische Erkennen einer Ampel und das Regeln der Längsführung in Abhängigkeit von einem Lichtsignal der Ampel und/oder Verkehrszeichen sein.

Das Fahrerassistenzsystem kann eine Mehrzahl von Umfeldsensoren aufweisen, mit denen das Umfeld des Fahrzeugs erfasst werden kann. Diese Umfeldsensoren können dazu ausgebildet sein, Objekte in dem Umfeld zu erkennen bzw. die Abstände zu den Objekten zu bestimmen. Zudem kann das Fahrerassistenzsystem als Umfeldsensor eine Kamera aufweisen, wobei mittels geeigneter Verfahren der Bildverarbeitung anhand der Bilder der Kamera Verkehrszeichen und/oder Lichtsignale einer Lichtsignalanlage bzw. Ampel erkannt werden können. Darüber hinaus kann das Fahrerassistenzsystem eine Recheneinrichtung aufweisen, mittels welcher die Sensordaten der Umfeldsensoren verarbeitet werden können. Mittels der Recheneinrichtung können auch Steuersignale zur Regelung der Längsführung und/oder Querführung des Fahrzeugs bei den teilautomatisierten Fahrmanövern ausgegeben werden. Das Fahrerassistenzsystem kann eine Fahrfunktionseinrichtung aufweisen, welche mittels der Recheneinrichtung zum Durchführen der teilautomatisierten Fahrmanöver angesteuert wird.

Mithilfe der Recheneinrichtung kann zudem eine vorbestimmte Anzahl von teilautomatisierten Funktionen bestimmt werden, nach deren Erreichen eine Fahrermoderation durchgeführt wird. Mittels der Recheneinrichtung kann zudem das Moderationssignal für die Fahrermoderation ausgegeben werden. Die Recheneinrichtung kann beispielsweise durch ein Steuergerät gebildet sein. Grundsätzlich kann es vorgesehen sein, dass das Fahrerassistenzsystem mehrere Recheneinrichtungen aufweist. Zudem können Teile des Fahrerassistenzsystems außerhalb des Fahrzeugs angeordnet sein. Wie zuvor erläutert, kann es sich bei dem Fahrerassistenzsystem um ein lernendes System handeln. Insbesondere in diesem Fall können sich Teile des Systems, beispielsweise eine Recheneinrichtung, auf welcher ein Algorithmus mit künstlicher Intelligenz ausgeführt wird, und eine Datenbank, außerhalb des Fahrzeugs befinden.

Des Weiteren kann das Fahrerassistenzsystem ein Informationssystem zum Bereitstellen einer Ausgabe an den Fahrer aufweisen. Mittels des Informationssystems kann der Fahrer zu einer Rückmeldung zu der nachfolgenden Funktion aufgefordert werden. Des Weiteren können mittels des Informationssystems Informationen an den Fahrer ausgegeben werden, welche das Umfeld des Fahrzeugs beschreiben. Beispielsweise können dem Fahrer Objekte und/oder Verkehrsteilnehmer in dem Umfeld angezeigt werden. Außerdem können mit dem Informationssystem mit dem Fahrerassistenzsystem geplante bzw. zukünftige Fahrmanöver angezeigt werden. Zudem kann das Fahrerassistenzsystem eine Erfassungseinrichtung aufweisen, mittels welcher die Rückmeldung von dem Fahrer erfasst werden kann. Das Fahrerassistenzsystem kann auch eine Signalisierungseinrichtung aufweisen, mittels welcher Signale oder Informationen an das Umfeld ausgegeben werden können. Ein solches Signal kann optisch und/oder akustisch ausgegeben werden.

Ein weiterer Aspekt der Erfindung betrifft ein Computerprogramm, umfassend Befehle, die bei der Ausführung des Programms durch eine Recheneinrichtung diese veranlassen, ein erfindungsgemäßes Verfahren und die vorteilhaften Ausgestaltungen davon auszuführen. Des Weiteren betrifft die Erfindung ein computerlesbares (Speicher)medium, umfassend Befehle, die bei der Ausführung durch eine Recheneinrichtung diese veranlassen, ein erfindungsgemäßes Verfahren und die vorteilhaften Ausgestaltungen davon auszuführen.

Ein erfindungsgemäßes Fahrzeug umfasst ein erfindungsgemäßes Fahrerassistenzsystem. Das Fahrzeug kann insbesondere als Personenkraftwagen ausgebildet sein.

Die mit Bezug auf das erfindungsgemäße Verfahren vorgestellten bevorzugten Ausführungsformen und deren Vorteile gelten entsprechend für das erfindungsgemäße Fahrerassistenzsystem, für das erfindungsgemäße Fahrzeug, für das erfindungsgemäße Computerprogramm sowie für das computerlesbare (Speicher)medium.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Fahrerassistenzsystem zum Durchführen von teilautomatisierten Funktionen aufweist; und
- Fig. 2: eine schematische Darstellung einer Verkehrssituation, bei welcher das Fahrzeug mittels des Fahrerassistenzsystems teilautomatisiert manövriert wird.

In den Figuren werden gleiche oder funktionsgleiche Elemente mit den gleichen Bezugszeichen versehen.

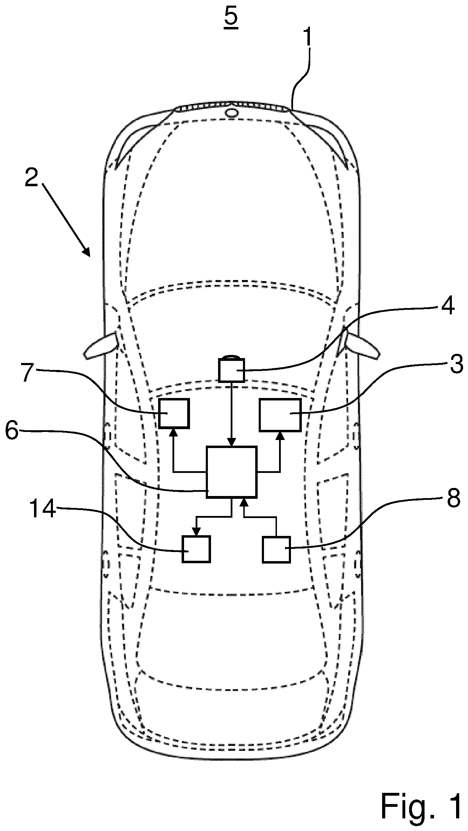

Fig. 1 zeigt in einer schematischen Darstellung ein Fahrzeug 1, welches vorliegend als Personenkraftwagen ausgebildet ist, in einer Draufsicht. Das Fahrzeug 1 umfasst ein Fahrerassistenzsystem 2, welches dazu dient, einen Fahrer beim Führen des Fahrzeugs 1 zu unterstützen. Insbesondere ist es vorgesehen, dass das Fahrzeug 1 mittels des Fahrerassistenzsystems 2 teilautomatisiert oder hochautomatisiert manövriert werden kann. Hierzu umfasst das Fahrerassistenzsystem 2 eine vorliegend nur schematisch dargestellte Fahrfunktionseinrichtung 3. Mittels der Fahrfunktionseinrichtung 3 kann eine Fahrfunktion des Fahrerassistenzsystems 2 bereitgestellt werden. Beispielsweise kann mittels der Fahrfunktionseinrichtung 3 eine Längsführung und/oder Querführung des Fahrzeugs 1 teilautomatisiert geregelt werden.

Des Weiteren umfasst das Fahrerassistenzsystem 2 zumindest einen Umfeldsensor 4, mittels welchem ein Umfeld 5 des Fahrzeugs 1 erfasst werden kann. Vorliegend umfasst das Fahrerassistenzsystem 2 beispielhaft einen Umfeldsensor 4, welcher als Kamera ausgebildet ist. Bevorzugt kann das Fahrerassistenzsystem 2 eine Mehrzahl von Umfeldsensoren 4 aufweisen. Mit dem Umfeldsensor 4 können Umfelddaten bzw. Bilddaten bereitgestellt werden und an eine Recheneinrichtung 6 des Fahrerassistenzsystems 2 übertragen werden. Mittels der Recheneinrichtung 6 können die Umfelddaten ausgewertet werden. Außerdem umfasst das Fahrerassistenzsystem 2 ein Informationssystem 7, mittels welcher eine Ausgabe an den Fahrer des Fahrzeugs 1 ausgegeben werden kann. Dabei kann die Ausgabe optisch, haptisch und/oder akustisch erfolgen. Außerdem umfasst das Fahrerassistenzsystem 2 einer Eingabeeinrichtung 8, mittels welcher eine Bedieneingabe von dem Fahrer erfasst werden kann. Mittels des Informationssystems 7 kann dem Fahrer zudem eine Information bereitgestellt werden, welche das Umfeld 5 und/oder geplante Fahrmanöver beschreibt. Außerdem umfasst das Fahrerassistenzsystem 2 eine Signalisierungseinrichtung 14, mittels welcher optische und/oder akustische Signale an das Umfeld 5 ausgegeben werden können. Diese Signalisierung an das Umfeld 5 kann auch vorangekündigt werden.

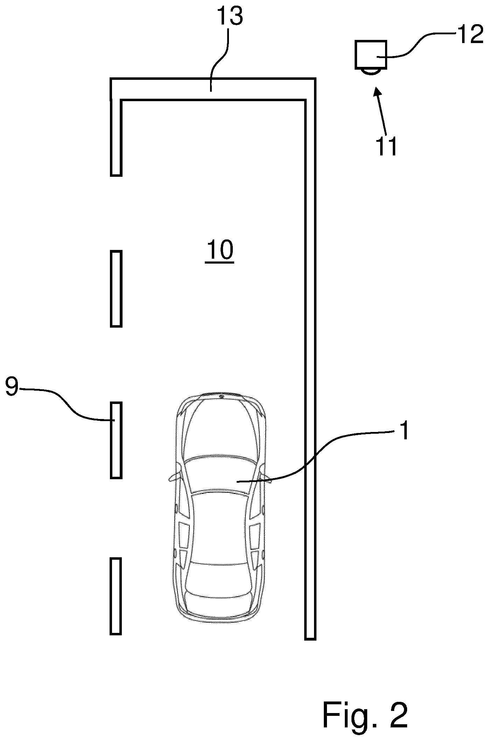

Fig. 2 zeigt eine schematische Darstellung einer Verkehrssituation. Hierbei wird das Fahrzeug 1 mittels des Fahrerassistenzsystems 2 teilautomatisiert manövriert. Während des Manövrierens des Fahrzeugs 1 können mittels der Recheneinrichtung 6 auf Grundlage der Umfelddaten des Umfeldsensors 4 bzw. der Bilddaten der Kamera Objekte in dem Umfeld 5 erkannt werden. Des Weiteren können anhand der Bilddaten Fahrbahnmarkierungen 9 erkannt werden. In Abhängigkeit von den erkannten Fahrbahnmarkierungen 9 kann dann mittels der Fahrfunktionseinrichtung 3 die Querführung des Fahrzeugs 1 geregelt werden, sodass das Fahrzeug 1 mittig in einer Fahrbahn 10 manövriert wird.

Darüber hinaus kann vorliegend auf Grundlage der Umfelddaten bzw. der Bilddaten ein Lichtsignal 11 einer Lichtsignalanlage 12 bzw. einer Ampel erkannt werden. Mittels der Recheneinrichtung 6 kann also anhand der Bilddaten erkannt werden, ob mit der Ampel ein rotes, ein gelbes oder ein grünes Lichtsignal ausgegeben wird. In dem vorliegenden Beispiel wird mittels der Lichtsignalanlage 12 aktuell ein rotes Lichtsignal 11 ausgegeben. In diesem Fall kann mittels des Fahrerassistenzsystems 2 ein teilautomatisiertes Fahrmanöver durchgeführt werden, bei welchem die Längsbeschleunigung des Fahrzeugs 1 in Abhängigkeit von dem Lichtsignal 11 geregelt wird und das Fahrzeug 1 so abgebremst wird, dass dieses vor einer Haltelinie 13 zum Stehen kommt.

Vorliegend ergibt sich aber die Situation, dass diese teilautomatisierte Fahrmanöver, bei welchem die rote Ampel erkannt wird und das Fahrzeug 1 automatisiert vor der Haltelinie 13 angehalten wird, bereits mehrmals zuvor durchgeführt wurde. Dies kann beispielsweise der Fall sein, wenn das Fahrzeug 1 diese Wegstrecke auf dem täglichen Weg zur Arbeit mehrmals durchfahren hat. Wenn dieses teilautomatisierte Fahrmanöver gemäß dem Level 2 von dem Fahrerassistenzsystem 2 mehrfach mit einer hohen Performanz durchgeführt wurde, kann der Fahrer in seltenen Fällen ein signifikantes Automatisierungsvertrauen entwickeln. Dies kann bedeuten, dass der Fahrer auf Fahrerassistenzsystem 2 vertrauen kann und dem Fahrmanöver nicht die erforderliche Aufmerksamkeit schenken kann.

Um diesem Aspekt zu entgegnen, ist es vorliegend vorgesehen, dass nach einer vorbestimmten Anzahl von durchgeführten teilautomatisierten Fahrmanövern für das nachfolgende teilautomatisierte Fahrmanöver, welches durchgeführt werden kann, eine Fahrermoderation gefordert wird. Insbesondere ist dies vorgesehen, wenn eine vorbestimmte Anzahl von demselben durchgeführten teilautomatisierten Fahrmanöver erreicht wird. Die Anzahl, nach welcher die Fahrermoderation gefordert wird, kann in Abhängigkeit davon bestimmt werden, wie komplex und/oder kritisch das teilautomatisierte Fahrmanöver ist. Das hier beschriebene Fahrmanöver, bei welchem das Fahrzeug 1 teilautomatisiert in Abhängigkeit von dem Lichtsignal 11 manövriert wird, kann als sicherheitskritisch angenommen werden. Daher kann die vorbestimmte Anzahl im Vergleich zu weniger kritischen Fahrmanövern geringer gewählt werden. Ferner kann bei der Bestimmung der Anzahl die Performanz des Fahrerassistenzsystems 2 bei der Durchführung vorhergehender ähnlicher oder gleicher Fahrmanöver berücksichtigt werden. Darüber hinaus kann die Anzahl in Abhängigkeit von einem Risikoprofil des Fahrers und/oder einer Aufmerksamkeit des Fahrers bestimmt werden. Es kann alternativ oder zusätzlich vorgesehen sein, dass die Anzahl mittels eines Zufallszahlengenerators bestimmt wird.

Falls die vorbestimmte Anzahl von bereits durchgeführten teilautomatisierten Fahrmanövern erreicht ist, kann für das nachfolgende teilautomatisierte Fahrmanöver - also das Erkennen des roten Lichtsignals 11 und das automatisierte Anhalten vor der Haltelinie - die Fahrermoderation gefordert werden. Hierzu kann mittels Recheneinrichtung 6 ein Moderationssignal ausgesendet werden und mittels der Ausgabeeinrichtung 7 eine Rückmeldung von dem Fahrer zu dem nachfolgenden teilautomatisierten Fahrmanöver gefordert werden. Dabei kann der Fahrer zu einer Bedieneingabe aufgefordert werden. Diese Bedieneingabe kann an einem Bedienelement oder durch eine Berührung eines der Pedale des Fahrzeugs 1 erfolgen. Die Bedieneingabe kann mittels der Eingabeeinrichtung 8 erfasst werden. Falls die Bedieneingabe von dem Fahrer durchgeführt wurde, kann im Anschluss daran das teilautomatisierte Fahrmanöver mittels des Fahrerassistenzsystems 2 durchgeführt werden. Alternativ dazu kann es vorgesehen sein, dass der Fahrer dazu aufgefordert wird, das nachfolgende Fahrmanöver selbst bzw. manuell durchzuführen.

Durch diese Fahrermoderation kann verhindert werden, dass der Fahrer auch bei einer hohen Performanz des Fahrerassistenzsystems 2 bzw. nach einer Mehrzahl von erfolgreich durchgeführten teilautomatisierten Fahrmanövern ein signifikantes Automatisierungsvertrauen aufbaut. Das beschriebene Verfahren kann auch für andere teilautomatisierte Fahrmanöver genutzt werden. Grundsätzlich kann das Verfahren für teilautomatisierte Funktionen, welche mit dem Fahrerassistenzsystem 2 durchgeführt werden bzw. genutzt werden. Solche teilautomatisierten Funktionen können neben den zuvor beschriebenen teilautomatisierten Fahrmanövern auch das Bereitstellen von Informationen mittels des Informationssystems 7 und/oder eine Ausgabe eines Signals an das Umfeld 5 mittels der Signalisierungseinrichtung 14 sein.

## Patentansprüche

1. Verfahren zum Betreiben eines Fahrerassistenzsystems (2) eines Fahrzeugs (1) mit den Schritten:
- Durchführen einer Mehrzahl von teilautomatisierten Funktionen mittels des Fahrerassistenzsystems (2) während eines Betriebs des Fahrzeugs (1),
- wobei bei den teilautomatisierten Funktionen mittels des Fahrerassistenzsystems (2) eine Längsführung und/oder eine Querführung des Fahrzeugs (1) geregelt werden und/oder eine Information, welche ein Umfeld (5) des Fahrzeugs (1) beschreibt, ausgegeben wird und/oder ein Signal an das Umfeld (5) ausgeben wird,
- wobei nach einer vorbestimmten Anzahl von durchgeführten teilautomatisierten Funktionen für eine nachfolgende Funktion, welche mittels des Fahrerassistenzsystems (2) teilautomatisiert durchführbar ist, ein Moderationssignal an einen Fahrer des Fahrzeugs (1) ausgegeben wird,
- wobei bei der Ausgabe des Moderationssignals der Fahrer zu einer Rückmeldung zu der nachfolgenden Funktion aufgefordert wird,
**dadurch gekennzeichnet, dass**
- die Anzahl in Abhängigkeit von einer Performanz des Fahrerassistenzsystems (2) vorbestimmt wird.

2. Verfahren nach Anspruch 1, **dadurch gekennzeichnet, dass** der Fahrer bei der Ausgabe des Moderationssignals zu einer Bestätigung aufgefordert wird, dass die nachfolgende Funktion teilautomatisiert von dem Fahrerassistenzsystem (2) durchgeführt wird.

3. Verfahren nach einem der vorhergehenden Ansprüche, **dadurch gekennzeichnet, dass** die Anzahl in Abhängigkeit von einem zuvor bestimmten Risikoprofil des Fahrers vorbestimmt wird.

4. Verfahren nach einem der vorhergehenden Ansprüche, **dadurch gekennzeichnet, dass** die Anzahl in Abhängigkeit davon vorbestimmt wird, wie komplex und/oder kritisch die nachfolgende Funktion ist.

5. Verfahren nach einem der vorhergehenden Ansprüche, **dadurch gekennzeichnet, dass** die Anzahl mittels eines Zufallsgenerators vorbestimmt wird.

6. Verfahren nach einem der vorhergehenden Ansprüche, **dadurch gekennzeichnet, dass** das Moderationssignal ausgegeben wird, falls die teilautomatisierten Funktionen auf demselben Streckenabschnitt durchgeführt wurden.

7. Fahrerassistenzsystem (2) für ein Fahrzeug (1), welches zum Durchführen eines Verfahrens nach einem der vorhergehenden Ansprüche eingerichtet ist.

8. Fahrzeug (1) mit einem Fahrerassistenzsystem (2) nach Anspruch 7.

## Claims

1. Method for operating a driver assistance system (2) of a vehicle (1), having the following steps:
- performing a plurality of partially automated functions by way of the driver assistance system (2) during operation of the vehicle (1),
- wherein, in the partially automated functions, longitudinal guidance and/or transverse guidance of the vehicle (1) are and/or is regulated and/or information that describes surroundings (5) of the vehicle (1) is output and/or a signal is output to the surroundings (5) by way of the driver assistance system (2),
- wherein, following a predetermined number of performed partially automated functions, a moderation signal is output to a driver of the vehicle (1) for a following function that is able to be performed in a partially automated manner by way of the driver assistance system (2),
- wherein, when the moderation signal is output, the driver is asked for feedback regarding the following function, **characterized in that**
- the number is predetermined on the basis of a performance of the driver assistance system (2).

2. Method according to Claim 1, **characterized in that**, when the moderation signal is output, the driver is asked for confirmation for the following function to be performed in a partially automated manner by the driver assistance system (2).

3. Method according to either of the preceding claims, **characterized in that** the number is predetermined on the basis of a previously determined risk profile of the driver.

4. Method according to one of the preceding claims, **characterized in that** the number is predetermined on the basis of the complexity and/or criticality of the following function.

5. Method according to one of the preceding claims, **characterized in that** the number is predetermined by way of a random generator.

6. Method according to one of the preceding claims, **characterized in that** the moderation signal is output if the partially automated functions have been performed on the same route section.

7. Driver assistance system (2) for a vehicle (1), which is configured to perform a method according to one of the preceding claims.

8. Vehicle (1) having a driver assistance system (2) according to Claim 7.

## Revendications

1. Procédé pour faire fonctionner un système d'aide à la conduite (2) d'un véhicule (1), comprenant les étapes suivantes :
- exécution d'une pluralité de fonctions partiellement automatisées au moyen du système d'aide à la conduite (2) pendant un fonctionnement du véhicule (1),
- un guidage longitudinal et/ou un guidage transversal du véhicule (1) étant régulés et/ou une information qui décrit un environnement (5) du véhicule (1) étant émise et/ou un signal étant émis vers l'environnement (5) au moyen du système d'aide à la conduite (2) lors des fonctions partiellement automatisées,
- un signal de modération étant émis à l'attention d'un conducteur du véhicule (1) après un nombre prédéterminé de fonctions partiellement automatisées exécutées pour une fonction suivante qui peut être exécutée de manière partiellement automatisée au moyen du système d'aide à la conduite (2),
- lors de l'émission du signal de modération, le conducteur étant invité à fournir un retour d'information à propos de la fonction suivante, **caractérisé en ce que**
- le nombre est prédéterminé en fonction d'une performance du système d'aide à la conduite (2).

2. Procédé selon la revendication 1, **caractérisé en ce que**, lors de l'émission du signal de modération, le conducteur est invité à confirmer que la fonction suivante sera exécutée de manière partiellement automatisée par le système d'aide à la conduite (2).

3. Procédé selon l'une des revendications précédentes, **caractérisé en ce que** le nombre est prédéterminé en fonction d'un profil de risque du conducteur préalablement déterminé.

4. Procédé selon l'une des revendications précédentes, **caractérisé en ce que** le nombre est prédéterminé en fonction de la complexité et/ou de la criticité de la fonction suivante.

5. Procédé selon l'une des revendications précédentes, **caractérisé en ce que** le nombre est prédéterminé au moyen d'un générateur de nombres aléatoires.

6. Procédé selon l'une des revendications précédentes, **caractérisé en ce que** le signal de modération est émis dans le cas où les fonctions partiellement automatisées ont été exécutées sur la même portion du parcours.

7. Système d'aide à la conduite (2) pour un véhicule (1), lequel est conçu pour mettre en œuvre un procédé selon l'une des revendications précédentes.

8. Véhicule (1) comprenant un système d'aide à la conduite (2) selon la revendication 7.
